# EUROPÄISCHE PATENTSCHRIFT

(11) **EP 1 789 235 B1**
(45) Veröffentlichungstag und Bekanntmachung des Hinweises auf die Patenterteilung: **03.02.2010**
(21) Anmeldenummer: 05774124.1
(22) Anmeldetag: 28.06.2005
(51) Int. Cl.: B25F 5/02

(54) **ELEKTROWERKZEUG MIT DOPPELTEM SCHALTER**
ELECTRIC TOOL COMPRISING A DOUBLE SWITCH
OUTIL ELECTRIQUE A DOUBLE INTERRUPTEUR

(30) Priorität: 31.08.2004 DE 102004042025
(43) Veröffentlichungstag der Anmeldung: 30.05.2007
(73) Patentinhaber: ROBERT BOSCH GMBH, 70442 Stuttgart (DE)
(72) Erfinder: FELDER, Sacha, CH-4513 Langendorf SO (CH); DA COSTA, Miguel, CH-4512 Bellach (CH)
(86) Internationale Anmeldenummer: PCT/EP2005/053038
(87) Internationale Veröffentlichungsnummer: WO 2006/024560

(56) Entgegenhaltungen:
- WO-A-96/41704
- US-A- 4 381 037

## Beschreibung

### Stand der Technik

Die Erfindung geht aus von einem Elektrowerkzeug mit den gattungsbildenden Merkmalen des Oberbegriffs des Anspruchs 1.

Elektrowerkzeuge sind allgemein bekannt. Derartige Werkzeuge weisen grundsätzlich einen Betriebs- oder auch Ein/Aus-Schalter auf, mit welchem das Werkzeug an- und ausgeschaltet werden kann. Dabei ist die richtige Anordnung des Betriebsschalters wichtig, damit das Elektrowerkzeug im Einsatz optimal bedient werden kann. Deshalb ist bei bekannten Elektrowerkzeugen der Betriebsschalter an einer Stelle am Werkzeug angeordnet, an welcher der Schalter während des normalen Betriebes des Werkzeuges vom Benutzer gut erreicht werden kann. Wenn ein derartiges bekanntes Elektrowerkzeug allerdings vom Benutzer nicht in der normalen vorgesehenen Stellung eingesetzt wird, sondern in einer außergewöhnlichen, kann der Betriebsschalter des Werkzeuges vom Benutzer oft nur noch schwer erreicht werden. Dies macht das Ein- und Ausschalten des Werkzeuges umständlich und zeitaufwändig.

Aus der US 4,381,037 ist ein Elektrohandwerkzeug bekannt, welches einen ersten Betriebsschalter und einen zweiten Betriebsschalter zum Ein- und Ausschalten des Elektromotors der Handwerkzeugmaschine aufweist Der erste Betriebsschalter befindet sich an einem ersten Handgriff, welcher sich im Wesentlichen in Längsrichtung der Handwerkzeugmaschine erstreckt Der zweite Betriebsschalter befindet sich an einem weiteren Handgriff, der gegenüber dem ersten Handgriff in einem rechten Winkel angeordnet ist.

Die Betriebsschalter sind mechanisch miteinander gekoppelt, so dass die Einschaltbewegung am zweiten Betriebsschalter auf den ersten Betriebsschalter mechanisch übertragen wird, der daraufhin den Antriebsmotor elektrisch einschaltet Realisiert wird dies über eine schwenkbare Lagerung jedes Betriebsschalters über jeweils einen Hebel und eine Kraftbeaufschlagung des ersten Betriebsschalters durch den zweiten Betriebsschalter.

Die Ausschaltbewegung ist dagegen nicht zwischen den beiden Betriebsschaltern gekoppelt Die Ausschaltbewegung erfolgt vielmehr in der Weise, dass beide Betriebsschalter durch Federkraft in die Aus-Stellung kraftbeaufschlagt sind.

Diese Ausführung weist den Nachteil auf, dass jeder Betriebsschalter, welcher an einem gelenkig gelagerten Hebel angeordnet ist, über jeweils ein Federelement in seine Aus-Position kraftbeaufschlagt werden muss. Es sind somit zwei Federelemente erforderlich. Ein weiterer Nachteil liegt in der verhältnismäßig anfälligen Konstruktion mithilfe der gelenkigen Lagerung der Betriebsschalter an jeweils einem Hebel. Insbesondere bei hohem Schmutzeintrag kann die Bewegungsübertragung bei einer Betätigung des zweiten Betriebsschalters auf den ersten Betriebsschalter nach längerer Betriebsdauer erschwert sein. Nachteilig ist auch, dass auf Grund des Zusammenspiels zwischen den Hebeln der Betriebsschaltern die konstruktive Gestaltungsfreiheit eingeschränkt ist.

### Vorteile der Erfindung

Ein erfindungsgemäßes Elektrowerkzeug mit den Merkmalen des Anspruchs 1 hat demgegenüber den Vorteil, dass damit ein Elektrowerkzeug geschaffen ist, welches nicht nur im normalen Betrieb einfach ein- und auszuschalten ist, sondern ebenso im besonderen Betrieb in außergewöhnlichen Stellungen einfach ein- und ausgeschaltet werden kann. Insbesondere erlaubt das erfindungsgemäße Elektrowerkzeug mit seinem zweiten Betriebsschalter ein einfaches Ein- und Ausschalten und damit optimales Arbeiten, wenn das Elektrowerkzeug über Kopf eingesetzt wird.

Der Begriff Elektrowerkzeug umfasst generell alle Werkzeuge, die elektrisch betrieben werden. Insbesondere handelt es sich dabei um Handwerkzeuge, d.h. Werkzeuge die mit der Hand bedient und geführt werden. Bevorzugt ist das Elektrowerkzeug eine Stichsäge.

Der erste Betriebsschalter und der zweite Betriebsschalter des Elektrowerkzeuges erfüllen die gleiche Funktion. Sie dienen beide zum Ein- und Ausschalten des Elektrowerkzeuges. Das erfindungsgemäße Elektrowerkzeug kann also wahlweise mit dem ersten oder mit dem zweiten Betriebsschalter in Betrieb oder außer Betrieb gesetzt werden. Vorzugsweise ist der erste Betriebsschalter derart an dem Elektrowerkzeug angeordnet, dass er im Normalbetrieb gut zu erreichen ist. Der zweite Betriebsschalter hingegen ist vorzugsweise derart angeordnet, dass er ein bequemes Ein- und Ausschalten des Werkzeuges in einer zur normalen Betriebsstellung unterschiedlichen besonderen Betriebsstellung ermöglicht. Vorzugsweise ist die besondere Betriebsstellung eine Kopfüberstellung, d.h. eine Stellung in welcher das Elektrowerkzeug im Vergleich zur Normalstellung um 180° gedreht, also sozusagen "auf dem Rücken" eingesetzt wird.

Wenn der zweite Betriebsschalter für den Kopfüber-Einsatz vorgesehen ist, ist es insbesondere von Vorteil, wenn der erste Betriebsschalter und der zweite Betriebsschalter im Wesentlichen rechtwinklig zueinander angeordnet sind. Dies bedeutet, dass die zwei durch die jeweiligen Betriebsschalter gebildeten Ebenen zueinander einen Winkel von ca. 90° bilden. Dieser Winkel kann vorzugsweise auch leicht geringer als 90° ausfallen.

In einer besonderen Ausführungsform der vorliegenden Erfindung kann das Elektrowerkzeug einen Seitengriff und einen Obergriff aufweisen, wobei der erste Betriebsschalter am Seitengriff angeordnet ist und der zweite Betriebsschalter am Obergriff angeordnet ist. Der Seitengriff und der Obergriff ermöglichen es, das Werkzeug zu halten und zu führen. Dabei ist der Obergriff vor allem dafür geeignet, das Elektrowerkzeug beim Einsatz über Kopf zu führen.

Vorzugsweise ist das erfindungsgemäße Elektrowerkzeug derart ausgestaltet, dass der Seitengriff und der Obergriff ineinander münden und dabei einen im Wesentlichen rechten Winkel bilden, wobei der erste Betriebsschalter und der zweite Betriebsschalter jeweils an gegenüberliegenden Flächen in diesem Winkel angeordnet sind. Bei dieser Konstellation treffen der Seitengriff und der Obergriff in einem gemeinsamen Bereich aufeinander und gehen ineinander über. Dabei ist der Obergriff im Normalbetrieb im Wesentlichen senkrecht, wohingegen der Seitengriff im Normalbetrieb im Wesentlichen waagerecht ist. Der erste Betriebsschalter und der zweite Betriebsschalter sind in diesem Fall nahe dem Übergangsbereich zwischen dem Seitengriff und dem O-bergriff angeordnet.

Der erste Betriebsschalter und der zweite Betriebsschalter sind miteinander gekoppelt, so dass eine Bewegung des ersten Betriebsschalters direkt auf den zweiten Betriebsschalter übertragen wird und umgekehrt. Der erste Betriebsschalter und der zweite Betriebsschalter sind über ein flexibles Verbindungselement mechanisch miteinander gekoppelt. Dies hat den Vorteil, dass für beide Betriebsschalter zusammen nur eine Vorrichtung zur Umsetzung der mechanischen Bewegung der Schalter in eine elektrische Größe nötig ist. Das flexible Verbindungselement ist vorzugsweise ein dünner Blechstreifen, welcher in dem durch den Seitengriff und den Obergriff gebildeten Winkel anliegt. Vorzugsweise ist an dem einen Ende des Verbindungselementes der erste Betriebsschalter befestigt und an dem zweiten Ende des Verbindungselementes der zweite Betriebsschalter, so dass der erste Betriebsschalter und der zweite Betriebsschalter sozusagen "um die Ecke" miteinander verbunden sind.

Es ist von Vorteil, wenn das Elektrowerkzeug eine Führung für das Verbindungselement aufweist, so dass dieses die Bewegung des einen Schalters sicher auf den anderen Schalter übertragen kann.

Schließlich ist der erste Betriebsschalter bevorzugt mit einem Verstellschieber verbunden, wobei der Verstellschieber eine Bewegung des ersten Betriebsschalters in eine elektrische Größe umsetzt. Der Verstellschieber ist vorzugsweise als langer dünner Steg ausgebildet, welcher mit der Elektronik des Elektrowerkzeuges verbunden ist. Durch eine Betätigung einer der zwei Betriebsschalter wird der Verstellschieber verstellt, und so das Elektrowerkzeug ein- oder ausgeschaltet.

### Zeichnungen

Ein Ausführungsbeispiel der Erfindung ist in der nachstehenden Beschreibung an Hand der zugehörigen Zeichnung näher erläutert.

Die Figuren zeigen:
Figur 1 eine perspektivische Gesamtansicht einer erfindungsgemäßen Stichsäge;
Figur 2 eine perspektivische, vergrößerte Teilansicht der Stichsäge gemäß Figur 1;
Figur 3 die Seite der Stichsäge gemäß Figur 1 in Teilansicht;
Figur 4 die Seite der Stichsäge gemäß Figur 1 in einer perspektivischen Teilansicht;
Figur 5 eine perspektivische Teilansicht der Stichsäge gemäß Figur 1 ohne Gehäuse;
Figur 6 eine Gesamtansicht der Stichsäge gemäß Figur 1 im Überkopfeinsatz.

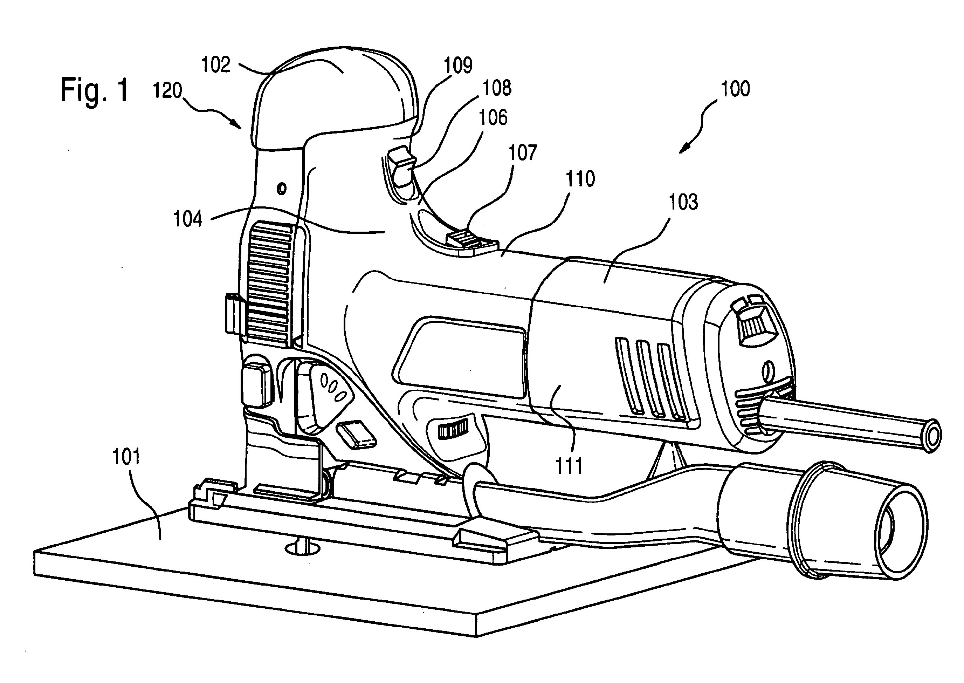

Figur 1 zeigt eine Stichsäge 100 in einer perspektivischen Gesamtansicht. Die Stichsäge 100 sitzt auf einem zu bearbeitenden Werkstück 101 auf. Bei dem Werkstück 101 kann es sich zum Beispiel um ein zu sägendes Holzbrett handeln. Die Stichsäge 100 verfügt über einen Obergriff 102 sowie einen Seitengriff 103. Der Obergriff 102 und der Seitengriff 103 sind im Wesentlichen rechtwinklig zueinander angeordnet. Die beiden Griffe münden in einen Übergangsbereich 104 ineinander. Im Winkel 106, der durch die zwei Griffe 102 und 103 gebildet wird, sind ein erster Betriebsschalter 107 und ein zweiter Betriebsschalter 108 angeordnet. Die zwei Betriebsschalter 107 und 108 liegen sozusagen über Eck. Man kann den ersten Betriebsschalter 107 und den zweiten Betriebsschalter 108 zusammenfassend auch als einen doppelten Schalter bezeichnen. Der zweite Betriebsschalter 108 ist an einer im Wesentlichen senkrechten Fläche 109 des Obergriffes 102 angeordnet. Der erste Betriebsschalter 107 ist an einer im Wesentlichen waagerechten Fläche 110 des Seitengriffes 103 angeordnet.

Die Stichsäge 100 verfügt zudem über ein schalenartiges Gehäuse 111.

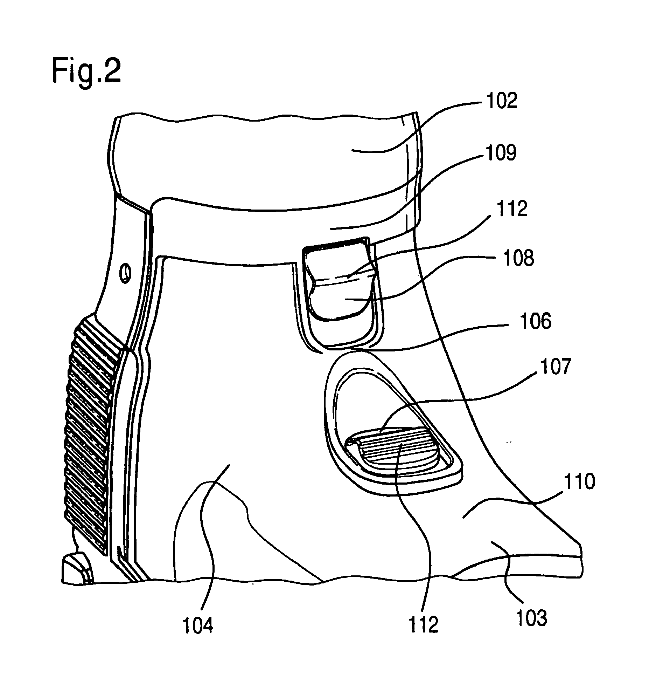

Figur 2 zeigt eine Detailansicht des ersten Betriebsschalters 107 und des zweiten Betriebsschalters 108. Die beiden Schalter sind "um die Ecke" nebeneinander angeordnet. Dabei befindet sich der zweite Betriebsschalter 108 über dem ersten Betriebsschalter 107. Dementsprechend kann auch der erste Betriebsschalter 107 als unterer Schalter bezeichnet werden und der zweite Betriebsschalter 108 als oberer Schalter. Die beiden Betriebsschalter weisen jeweils einen oder mehrere Vorsprünge 112 auf, mit welchen Sie durch Fingerdruck hin und her bewegt werden können.

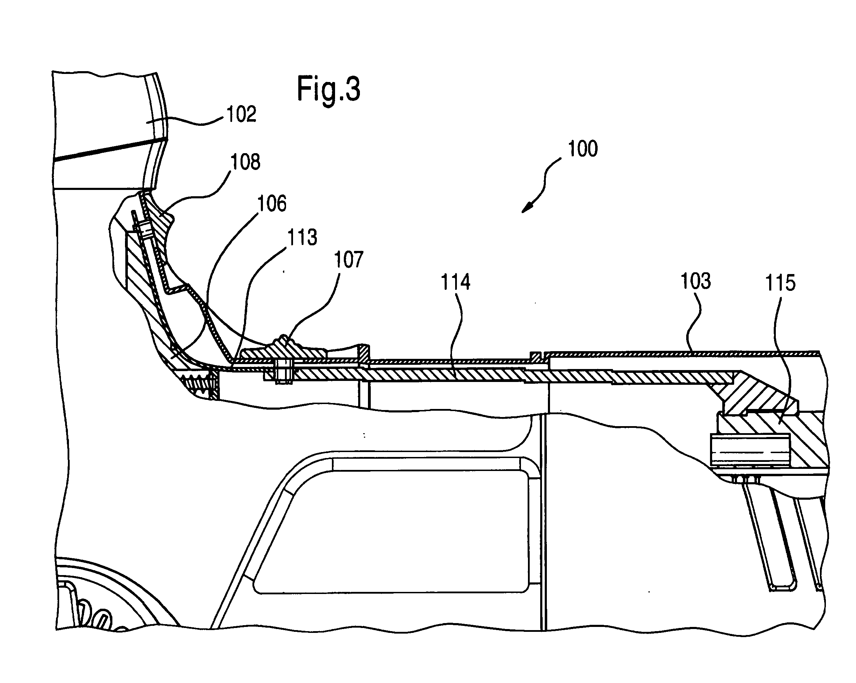

In Figur 3 sind der erste Betriebsschalter 107 und der zweite Betriebsschalter 108 von der Seite zu sehen. Der erste Betriebsschalter 107 liegt waagerecht auf dem Seitengriff 103 auf. Der zweite Betriebsschalter 108 ist fast senkrecht an dem Obergriff 102 angeordnet. Die beiden Schalter sind über ein Verbindungsblech 113 miteinander verbunden. Das Verbindungsblech 113 beschreibt den Winkel 106. An dem einen oberen Ende des Verbindungsbleches 113 ist der zweite Betriebsschalter 108 befestigt. An dem anderen unteren Ende ist der erste Betriebsschalter 107 befestigt. Das Verbindungsblech 113 ist flexibel und gleichzeitig klar geführt. Ein Verstellschieber 114 ist mit dem ersten Betriebsschalter 107 und mit der Elektronik 115 der Stichsäge 100 verbunden.

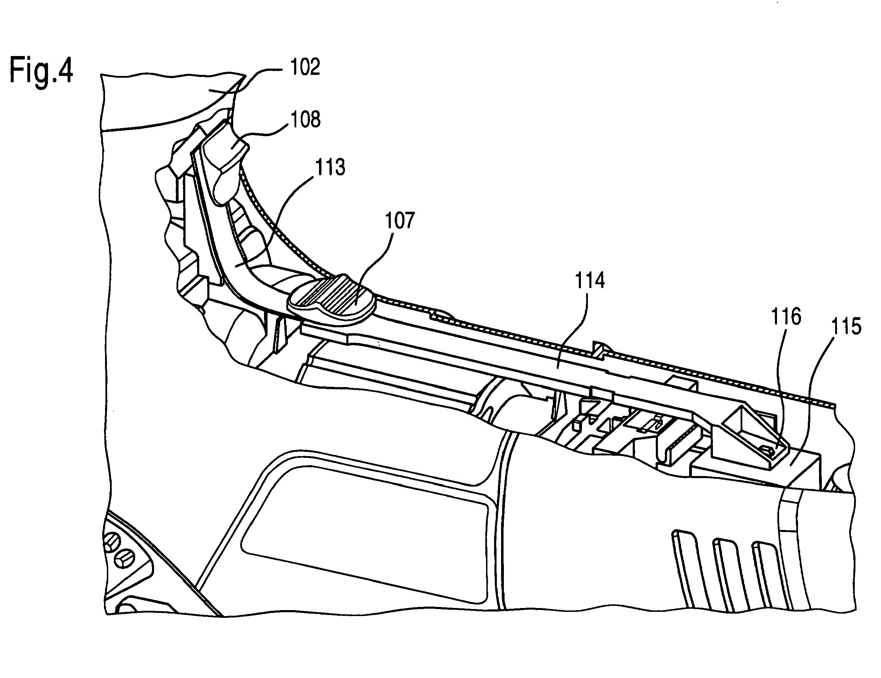

Figur 4 ist eine perspektivische Detailansicht. In dieser Ansicht sind das flexible gekrümmte Verbindungsblech 113 und der Verstellschieber 114 deutlich zu erkennen. Der Verstellschieber 114 verfügt über einen vorderen Abschnitt 116 mit welchem er mit der Elektronik 115 in Eingriff tritt.

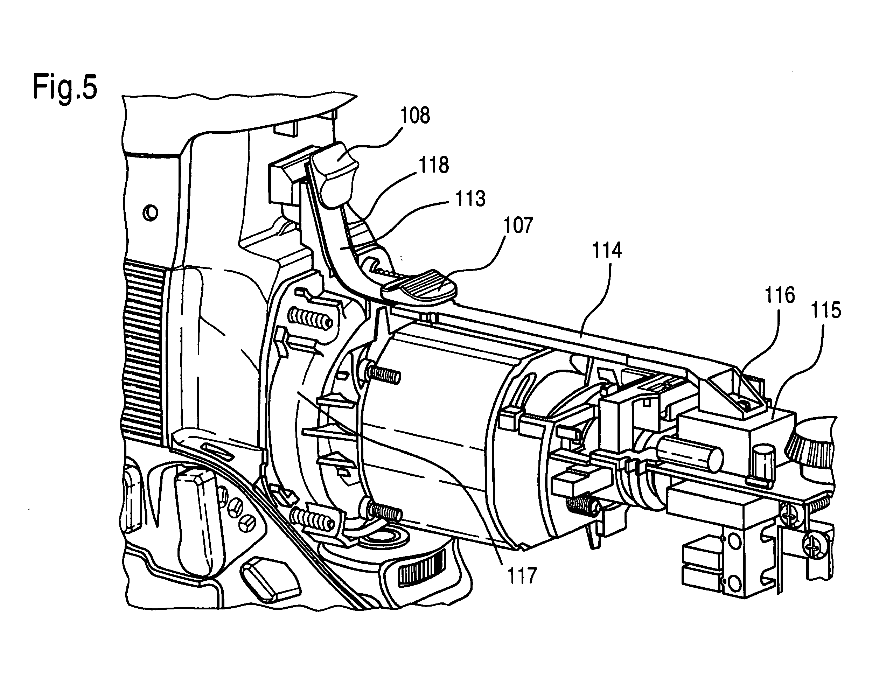

Figur 5 ist eine weitere perspektivische Detailansicht ähnlich zu Figur 4. In dieser Figur ist die Führung des Verbindungsbleches 113 zu erkennen. Das Blech 113 wird zum einen innerhalb der Gehäuseschale 111 (s. Figur 1) der Stichsäge 100 und zum anderen mit der Abdeckscheibe 117 der Stichsäge 100 geführt. Insbesondere ist eine Rampe oder auch schräge Fläche 118 vorgesehen, auf welcher das Verbindungsblech 113 aufliegt.

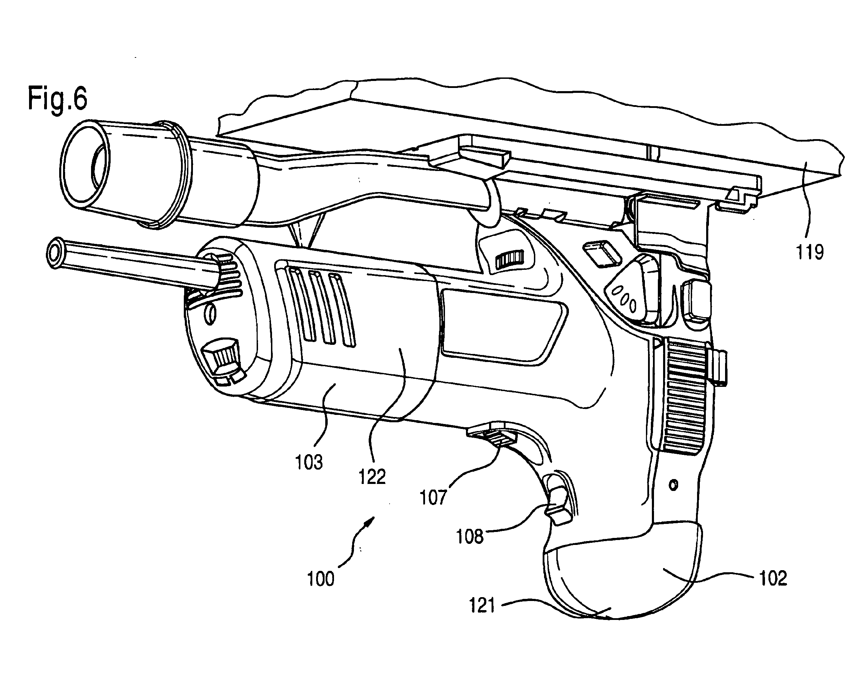

Figur 6 zeigt die Stichsäge 100 kopfüber. Die Stichsäge 100 liegt dabei an einer zu bearbeitenden Holzdecke 119 an.

Im Folgenden wird nun die Funktionsweise des Doppelschalters 107, 108 anhand der Figur 5 beschrieben.

Die Stichsäge 100 kann wahlweise über den ersten Betriebsschalter 107 oder über den zweiten Betriebsschalter 108 ein- und ausgeschaltet werden. Falls der erste Betriebsschalter 107 betätigt wird, wird dabei gleichzeitig der zweite Betriebsschalter 108 über das Verbindungsblech 118 mitgenommen. Zusätzlich wird der Verstellschieber 114 verstellt. Über seinen vorderen Abschnitt 116 wirkt der Verstellschieber 114 auf die Elektronik 115, so dass die Stichsäge 100 ein- oder ausgeschaltet wird. Falls der zweite Betriebsschalter 108 betätigt wird, wird die Schaltbewegung durch das flexible Verbindungsblech 118 auf den ersten Betriebsschalter 107 übertragen, der wiederum die Bewegung an den Verstellschieber 114 überträgt.

Anhand der Figuren 1 und 6 wird nun der Einsatz der beiden Schalter 107 und 108 veranschaulicht.

Figur 1 zeigt den Normalbetrieb der Stichsäge 100. In diesem Zustand will ein Nutzer mit der Stichsäge 100 ein Holzbrett 101 zersägen. Dazu setzt der Nutzer die Stichsäge 100 wie dargestellt auf die Holzplatte 101 auf. Dabei umfasst er mit der einen Hand einen vorderen Bereich 120 des Obergriffes 102 und mit der anderen Hand den Seitengriff 103, so dass der Daumen der letzteren Hand auf der Fläche 110 des Seitengriffs 103 aufliegt. Um das Sägen zu beginnen, muss der Nutzer nun die Stichsäge 100 einschalten. Dazu verwendet er den ersten Betriebsschalter 107. Dieser liegt in unmittelbarer Nähe zu dem Daumen, welcher auf der Fläche 110 aufliegt. Dementsprechend kann die Stichsäge 100 durch eine einfache Bewegung dieses Daumens mittels des ersten Betriebsschalters 107 ein- und ausgeschaltet werden. Für den normalen Betrieb der Stichsäge 100 ist der erste Betriebsschalter 107 also optimal positioniert. Jedoch ist der erste Betriebsschalter 107 im Falle eines Überkopfarbeitens nur sehr schwer zu erreichen. Dies wird nun anhand der Figur 6 dargestellt.

Im Falle der Figur 6 möchte ein Nutzer die Stichsäge 100 sozusagen auf dem Rücken einsetzen, um eine Holzdecke 119 zu bearbeiten. Hierzu setzt der Nutzer die Stichsäge 100 wie dargestellt kopfüber an der Decke 119 an. Dann umgreift der Nutzer mit der einen Hand den Kopf 121 des Obergriffes 102. Mit der anderen Hand umgreift der Nutzer den Griff 103. Da in diesem Fall der Seitengriff 103 mit der Hand nicht wie im Falle der Figur 1 seitlich umfasst wird, sondern von unten, liegt der Daumen des Nutzers diesmal an einer der zwei Seitenflächen 122 des Seitengriffs 103 an. Dementsprechend ist der erste Betriebsschalter 107 bei einem Überkopfarbeiten nur durch ein umständliches Umgreifen zu erreichen. Deshalb wird bei dem in Figur 6 gezeigten Zustand der zweite Betriebsschalter 108 zum Ein- und Ausschalten der Stichsäge 100 verwendet.

Dieser zweite Betriebsschalter liegt nun in unmittelbarer Nähe zum Daumen der anderen Hand des Nutzers. Somit kann der Nutzer dank des zweiten Betriebsschalters 108 auch bei Überkopfarbeiten mit dem Daumen einer Hand die Stichsäge 100 auf einfache Weise ein- und ausschalten, ohne umgreifen zu müssen.

## Patentansprüche

1. Elektrowerkzeug mit einem ersten Betriebsschalter (107) zum Ein- und Ausschalten des Elektrowerkzeuges (100), wobei das Elektrowerkzeug (100) zusätzlich einen zweiten Betriebsschalter (108) zum Ein- und Ausschalten aufweist und der erste Betriebsschalter (107) und der zweite Betriebsschalter (108) miteinander gekoppelt sind, **dadurch gekennzeichnet, dass** der erste Betriebsschalter (107) und der zweite Betriebsschalter (108) über ein flexibles Verbindungselement (113) mechanisch miteinander gekoppelt sind.

2. Elektrowerkzeug nach Anspruch 1, **dadurch gekennzeichnet, dass** der erste Betriebsschalter (107) und der zweite Betriebsschalter (108) im Wesentlichen rechtwinklig zueinander angeordnet sind.

3. Elektrowerkzeug nach Anspruch 1 oder 2, **dadurch gekennzeichnet, dass** das Elektrowerkzeug (100) einen Seitengriff (103) und einen Obergriff (102) aufweist, wobei der erste Betriebsschalter (107) am Seitengriff (103) angeordnet ist und der zweite Betriebsschalter (108) am Obergriff (102) angeordnet ist

4. Elektrowerkzeug nach Anspruch 3, **dadurch gekennzeichnet, dass** der Seitengriff (103) und der Obergriff (102) ineinander münden und dabei einen im Wesentlichen rechten Winkel (106) bilden, wobei der erste Betriebsschalter (107) und der zweite Betriebsschalter (108) jeweils an gegenüberliegenden Flächen (109,110) in diesem Winkel (106) angeordnet sind.

5. Elektrowerkzeug nach einem der Ansprüche 1 bis 4, **dadurch gekennzeichnet, dass** das Verbindungselement (113) aus Blech ist.

6. Elektrowerkzeug nach einem der Ansprüche 1 bis 5, **dadurch gekennzeichnet, dass** das Elektrowerkzeug (100) eine Führung (117, 118) für das Verbindungselement (113) aufweist.

7. Elektrowerkzeug nach einem der Ansprüche 1 bis 6, **dadurch gekennzeichnet, dass** der erste Betriebsschalter (107) mit einem Verstellschieber (114) verbunden ist, wobei der Verstellschieber (114) eine Bewegung des ersten Betriebsschalters (107) in eine elektrische Größe umsetzt.

8. Elektrowerkzeug nach einem der Ansprüche 1 bis 7, **dadurch gekennzeichnet, dass** das Elektrowerkzeug (100) eine Stichsäge ist

## Claims

1. Electric tool comprising a first operating switch (107) for switching the electric tool (100) on and off, the electric tool (100) additionally comprising a second operating switch (108) for switching the electric tool (100) on and off, and the first operating switch (107) and the second operating switch (108) being coupled to one another, **characterized in that** the first operating switch (107) and the second operating switch (108) are mechanically coupled to one another via a flexible connecting element (113).

2. Electric tool according to Claim 1, **characterized in that** the first operating switch (107) and the second operating switch (108) are arranged substantially at right angles to one another.

3. Electric tool according to Claim 1 or 2, **characterized in that** the electric tool (100) has a side handle (103) and a top handle (102), the first operating switch (107) being arranged on the side handle (103) and the second operating switch (108) being arranged on the top handle (102).

4. Electric tool according to Claim 3, **characterized in that** the side handle (103) and the top handle (102) lead into one another and in the process form a substantially right angle (106), the first operating switch (107) and the second operating switch (108) each being arranged in this angle (106) on opposite surfaces (109, 110).

5. Electric tool according to one of Claims 1 to 4, **characterized in that** the connecting element (113) is made of sheet metal.

6. Electric tool according to one of Claims 1 to 5, **characterized in that** the electric tool (100) has a guide (117, 118) for the connecting element (113).

7. Electric tool according to one of Claims 1 to 6, **characterized in that** the first operating switch (107) is connected to an adjusting slide (114), the adjusting slide (114) converting a movement of the first operating switch (107) into an electrical quantity.

8. Electric tool according to one of Claims 1 to 7, **characterized in that** the electric tool (100) is a jigsaw.

## Revendications

1. Outil électrique comprenant un premier interrupteur de fonctionnement (107) pour mettre en marche et arrêter l'outil électrique (100), l'outil électrique (100) présentant en outre un deuxième interrupteur de fonctionnement (108) pour mettre en marche et arrêter, et le premier interrupteur de fonctionnement (107) et le deuxième interrupteur de fonctionnement (108) étant accouplés l'un à l'autre, **caractérisé en ce que** le premier interrupteur de fonctionnement (107) et le deuxième interrupteur de fonctionnement (108) sont accouplés l'un à l'autre mécaniquement par le biais d'un élément de connexion flexible (113).

2. Outil électrique selon la revendication 1, **caractérisé en ce que** le premier interrupteur de fonctionnement (107) et le deuxième interrupteur de fonctionnement (108) sont disposés essentiellement à angle droit l'un par rapport à l'autre.

3. Outil électrique selon la revendication 1 ou 2, **caractérisé en ce que** l'outil électrique (100) présente une prise latérale (103) et une prise supérieure (102), le premier interrupteur de fonctionnement (107) étant disposé sur la prise latérale (103) et le deuxième interrupteur de fonctionnement (108) étant disposé sur la prise supérieure (102).

4. Outil électrique selon la revendication 3, **caractérisé en ce que** la prise latérale (103) et la prise supérieure (102) se terminent l'une dans l'autre et forment ainsi un angle essentiellement droit (106), le premier interrupteur de fonctionnement (107) et le deuxième interrupteur de fonctionnement (108) étant chacun disposés sur des surfaces opposées (109, 110) dans cet angle (106).

5. Outil électrique selon l'une quelconque des revendications 1 à 4, **caractérisé en ce que** l'élément de connexion (113) est en tôle.

6. Outil électrique selon l'une quelconque des revendications 1 à 5, **caractérisé en ce que** l'outil électrique (100) présente un guide (117, 118) pour l'élément de connexion (113).

7. Outil électrique selon l'une quelconque des revendications 1 à 6, **caractérisé en ce que** le premier interrupteur de fonctionnement (107) est connecté à une tirette de coulissement (114), la tirette de coulissement (114) convertissant un déplacement du premier interrupteur de fonctionnement (107) en une grandeur électrique.

8. Outil électrique selon l'une quelconque des revendications 1 à 7, **caractérisé en ce que** l'outil électrique (100) est une scie sauteuse.
